# EUROPÄISCHE PATENTANMELDUNG

(11) **EP 4 538 813 A1**
(43) Veröffentlichungstag der Anmeldung: **16.04.2025**
(21) Anmeldenummer: 23202583.3
(22) Anmeldetag: 10.10.2023
(51) Int. Cl.: G05B 19/418

(54) **VERFAHREN ZUM BEREITSTELLEN EINES ARBEITSPLANS ZUR HERSTELLUNG EINES BAUTEILS, COMPUTERPROGRAMM UND DATENTRÄGER**

(71) Anmelder: Siemens Aktiengesellschaft, 80333 München (DE)
(72) Erfinder: Kesler, Selin, 82008 Unterhaching (DE); Lohse, Oliver, 85614 Kirchseeon (DE)
(74) Vertreter: Siemens Patent Attorneys

(57) **Zusammenfassung**

Die Erfindung betrifft ein Verfahren zum Bereitstellen beziehungsweise Erzeugen eines Arbeitsplans, welcher für die Herstellung eines Bauteils, insbesondere beispielsweise eine Welle, verwendet wird. Ferner betrifft die Erfindung ein Computerprogramm sowie einen elektronisch lesbaren Datenträger.

## Beschreibung

Die Erfindung betrifft ein Verfahren zum Bereitstellen beziehungsweise Erzeugen eines Arbeitsplans, welcher für die Herstellung eines Bauteils verwendet wird, gemäß dem Patentanspruch 1. Ferner betrifft die Erfindung ein Computerprogramm sowie einen elektronisch lesbaren Datenträger gemäß den Patentansprüchen 11 und 12.

Zum Herstellen eines Bauteils, welches beispielsweise als Maschinenteil und insbesondere als Welle ausgebildet ist, wird ein Arbeitsplan benötigt. Die Arbeitsplanherstellung erfordert heutzutage einen hohen manuellen Aufwand.

Soll ein neues Bauteil produziert werden, erhält in der Regel der Fertigungsplaner vom Konstrukteur ein entsprechendes dreidimensionales Modell, insbesondere ein CAD-Modell, und zugehörige Zeichnungen. Der Fertigungsplaner kann entweder einen komplett neuen Arbeitsplan anlegen oder einen bestehenden kopieren und anpassen, sodass dieser für das neue Bauteil verwendet werden kann. Da die Arbeitsplanerstellung sehr zeitaufwendig ist, wird nach Möglichkeit ein ähnlicher Arbeitsplan gesucht und angepasst.

In solch einem Arbeitsplan sind die unterschiedlichen Arbeitsvorgänge (AVO) sowie entsprechende Arbeitsplätze, Rüst- und Bearbeitungszeiten, Werkzeuge enthalten. Zusätzlich sind beispielsweise CNC-Programme, mittels einer ID verknüpft, die ein Werker an einer Maschine auswählen muss. Darüber hinaus kann ein solcher Arbeitsplan einen Freitext für Hilfestellungen oder dergleichen enthalten.

Typischerweise wird ein sequentieller Arbeitsplan angelegt, bei welchem Arbeitsvorgänge für die Herstellung des Bauteils in einer bestimmten Reihenfolge abzuarbeiten sind.

Treten in der Fertigung beziehungsweise Herstellung des Bauteils Störungen auf, so müssen Fertigungsaufträge beispielsweise auf andere Arbeitsplätze ausweichen, wobei solch ein sequentieller Arbeitsplan keine Flexibilität ermöglicht.

Aufgabe der vorliegenden Erfindung ist es, ein Verfahren sowie ein Computerprogramm und einen Datenträger bereitzustellen, durch welche ein Arbeitsplan möglichst automatisch erstellt werden kann und darüber hinaus der Arbeitsplan so ausgestaltet ist, dass dieser insbesondere mehrere mögliche Fertigungsreihenfolgen umfasst.

Diese Aufgabe wird erfindungsgemäß durch die Gegenstände der unabhängigen Patentansprüche gelöst. Vorteilhafte Ausgestaltungen und Weiterbildungen sowie Vorteile der Erfindung sind in den abhängigen Patentansprüchen sowie in der Beschreibung und in der Zeichnung gezeigt.

Ein erster Aspekt der Erfindung betrifft ein Verfahren zum Bereitstellen beziehungsweise Erzeugen eines Arbeitsplans, welcher für die Herstellung eines Bauteils, welches insbesondere als Welle ausgebildet sein kann, verwendet wird. Das erfindungsgemäße Verfahren umfasst die folgenden Schritte:
In einem ersten Schritt erfolgt ein Erfassen eines dreidimensionalen Modells, welches insbesondere ein CAD-Modell sein kann, des Bauteils durch eine Erfassungseinheit. In einem zweiten Schritt erfolgt ein Bestimmen beziehungsweise Ableiten oder Identifizieren von Merkmalen des Bauteils durch eine Merkmalerkennungseinheit, wobei für das jeweilige bestimmende Merkmal ein Knoten, welcher zumindest einen Merkmalstyp umfasst, gebildet wird. In einem dritten Schritt erfolgt das Bilden eines Graphenmodells des Bauteils mittels der Knoten und durch Charakterisieren von Kanten, welche einen Zusammenhang zweier Knoten beschreiben. In einem vierten Schritt erfolgt ein Zuordnen des jeweiligen Knotens des Graphenmodells zu wenigstens einem Arbeitsvorgang mittels einer Klassifizierungseinheit. In einem fünften Schritt erfolgt schließlich das Bilden des Arbeitsplanes in Abhängigkeit von den zugeordneten Arbeitsvorgängen.

Das erfindungsgemäße Verfahren dient zum Bereitstellen des Arbeitsplanes und somit im Wesentlichen zum Herstellen des Bauteils, wobei der Arbeitsplan insbesondere eine Fertigung des Bauteils mittels Maschinen beschreibt. Dabei kann der jeweilige Arbeitsvorgang (AVO) durch eine entsprechende Maschine ausgeführt werden.

Das Bauteil kann insbesondere als Maschinenelement, wie beispielsweise eine Welle, ausgebildet sein. Ferner kann das Bauteil beispielsweise auch ein kubische oder quaderförmige Gestallt haben. Dabei kann eine Welle insbesondere rotationssymmetrisch beziehungsweise im Wesentlichen rotationssymmetrisch sein. Im Wesentlichen rotationssymmetrisch bedeutet hier, dass eine rotationssymmetrische Welle beispielsweise ein Merkmal wie eine Bohrung aufweisen kann, welche beispielsweise quer zur Rotationsachse angeordnet ist und somit die Rotationssymmetrie bricht. Ein im Wesentlichen die Welle ausbildender Zylinder ist jedoch rotationssymmetrisch.

Der Arbeitsplan kann mittels des erfindungsgemäßen Verfahrens insbesondere als neutraler Arbeitsplan erzeugt werden, wobei der Arbeitsplan die Geometrie verändernde Prozesse beschreibt, durch welche aus einem Halbzeug beispielsweise mittels Zerspanen die Welle gebildet wird. Ein neutraler Arbeitsplan bezeichnet entsprechende Arbeitsvorgänge maschinenunabhängig beziehungsweise abstrakt. So braucht beispielsweise für eine Bohrung beziehungsweise Zylinderförmige Vertiefung noch nicht festgelegt sein, ob diese beispielsweise mittels Drehen, Fräsen und/oder Bohren erzeugt wird. Insbesondere ist der Arbeitsplan nicht sequentiell, sondern kann als Netzplan ausgebildet sein, wodurch beispielsweise in Abhängigkeit von den zu fertigenden Merkmalen eine bestimmte Flexibilität in der Reihenfolge der Arbeitsvorgänge ermöglicht ist.

Die Erfassungseinheit ist beispielsweise eine Schnittstelle einer elektronischen Recheneinrichtung beziehungsweise eine Kommunikationseinrichtung der elektronischen Recheneinrichtung oder die elektronische Recheneinrichtung selbst, wenn diese dazu ausgebildet sind, das dreidimensionale Modell zu erfassen, wenn dieses beispielsweise als eine Datei in einem Speicher der elektronischen Recheneinrichtung vorgehalten wird. Das dreidimensionale Modell selbst kann insbesondere als CAD-Modell ausgebildet sein, wobei CAD ein rechnerunterstütztes Konstruieren beschreibt, im Englischen spricht man dabei vom Computer-Aided Design oder kurz CAD.

Das Bauteil weist insbesondere mehrere Merkmale auf, welche beispielsweise Flächen an dem Bauteil, deren Position zueinander und deren Eigenschaften, wie beispielsweise eine Rauheit, beschreiben können. Mittels der Merkmalerkennungseinheit, welche insbesondere durch eine Methode des maschinellen Lernens gebildet sein kann, wird es ermöglicht, das dreidimensionale Modell derart zu erfassen, dass das Ableiten beziehungsweise Identifizieren der Merkmale ermöglicht wird. Für jedes somit identifizierte Merkmal wird ein Knoten gebildet beziehungsweise erzeugt, welcher einen Knoten des Graphen beziehungsweise des Graphenmodells, welches zu bilden ist, vorstellt. Dabei kann man davon sprechen, dass der Knoten insbesondere gelabelt ist, da dem Knoten beispielsweise zumindest einem Merkmalstyp zugeordnet ist.

Das Merkmal kann im Englischen als Feature bezeichnet werden, so kann man den Knoten derart beschreiben, dass der Knoten die Information des Featuretyps, beispielsweise Bohrung oder Tasche, sowie eine Dimension, wie Länge und/oder Radius beziehungsweise Form und/oder Lagetoleranz, des Features beziehungsweise Merkmals beschreibt. Das Graphenmodell wird dadurch gebildet, dass die ermittelten beziehungsweise gebildeten Knoten durch entsprechende Kanten verbunden werden, welche einen Zusammenhang zweier Knoten beschreiben. So kann beispielsweise die Kante eine Nachbarschaft zweier Knoten an dem Bauteil beschreiben, sodass beispielsweise eine Fläche, in welcher eine Bohrung ausgebildet ist beziehungsweise an welcher eine Bohrung startet und diese somit in direkter Nachbarschaft sind, miteinander mittels einer Kante verbunden werden. Zusätzlich oder darüber hinaus kann die Kante beispielsweise eine gemeinsame Eigenschaft einer Oberflächenbeschaffenheit beschreiben. Insbesondere kann solch eine Kante Informationen zu Produkt und Herstellung (Englisch: Product and Manufacturing Information oder kurz PMI) umfassen. So können alle Abhängigkeiten des 3D-Modells zusammen mit dem PMI als Graph dargestellt werden. Die PMI kann beispielsweise eine umfassende Anmerkungsumgebung bilden, durch welche beispielsweise Ingenieure beziehungsweise entsprechende mit dem Erstellungsprozess Beauftragte Fertigungsanforderung eines Bauteils direkt zum 3D-Modell beziehungsweise Graphenmodell erfassen und zuordnen können.

Mittels der Klassifizierungseinheit, welche ebenfalls insbesondere analog zu der Merkmalserkennungseinheit als Methode des maschinellen Lernens ausgebildet sein kann, können an dem nun vorhandenen Graphenmodell entsprechende Knoten klassifiziert werden, sodass dem jeweiligen Knoten und somit Merkmal beziehungsweise Eigenschaft des Bauteils ein Arbeitsvorgang zugeordnet werden kann. Handelt es sich bei dem Knoten beispielsweise um eine Bohrung, kann ein entsprechender Arbeitsvorgang ausgewählt werden, wobei die Arbeitsvorgänge klassifiziert sind. So können beispielsweise ein Bohren sowie ein Fräsen eine jeweilige AVO-Klasse darstellen. Dabei erfolgt das Zuordnen des jeweiligen Knotens zu dem wenigstens einen Arbeitsvorgang, insbesondere unter Berücksichtigung der Abhängigkeit von dem Merkmal beziehungsweise Feature. Der Arbeitsvorgang charakterisiert somit insbesondere einen Fertigungsschritt.

Das Graphenmodell kann insbesondere so gebildet werden, dass Lokalisierungsinformationen beispielsweise als jeweiliger Merkmalstyp abgebildet beziehungsweise hinterlegt sind. Dabei ist eine Lokalisierungsinformation insbesondere eine Information, welche das zugehörige Merkmal für eine für die Fertigung verwendete Maschine beispielsweise in deren Koordinatensystem lokalisiert. Lokalisierungsinformationen können insbesondere dabei hilfreich sein, wenn ein Computer-Aided Manufacturing, im Englischen kurz CAM genannt, zur Herstellung eines Bauteils verwendet werden soll. Der Arbeitsplan beschreibt somit die geometrieverändernden Prozesse, welche zum Herstellen des Bauteils zu erfolgen haben. Darüber hinaus kann der Arbeitsplan insbesondere an einer Schnittstelle, insbesondere der elektronischen Recheneinrichtung, bereitgestellt werden.

Zusätzlich oder alternativ zu der CAM kann beispielsweise ein sogenannter Bill of process oder kurz BOP beschrieben werden, welcher einen geplanten Produktionseinsatz für ein bestimmtes Produkt charakterisiert. Dabei kann solch eine BOP Vorlagen für bewährte Verfahren zur Herstellung eines Endprodukts umfassen, wobei in einer Stückliste beispielsweise Konfigurationen der Produktionslinie, Werkzeuge, Maschinen und Aufrüstung aufgeführt sind, die für die Herstellung des Bauteils beziehungsweise Produkts benötigt werden.

Mit anderen Worten wird durch das Verfahren die Möglichkeit bereitgestellt, anhand eines dreidimensionalen CAD-Modells unter Zuhilfenahme einer Merkmalerkennungseinheit das dreidimensionale Modell in ein Graphenmodell umzuwandeln. An dem Graphenmodell kann mittels einer Klassifizierungseinheit auf eine effiziente Weise eine Klassifizierung stattfinden, welche für die Knoten des Graphenmodells und somit Merkmale des Bauteils die durchzuführenden Arbeitsvorgänge bestimmen kann.

So kann eine besonders effiziente Arbeitsplanerstellung erfolgen. Im Vergleich dazu erfolgt eine heutzutage durchgeführte Arbeitsplanerstellung manuell und nur in kleinen Teil regelbasiert. Die vorgestellte Methode beziehungsweise das erfindungsgemäße Verfahren ist nun in der Lage Arbeitspläne zu erzeugen, wobei im Gegensatz zu regelbasierten Ansätzen die Erkennungseinheit und Klassifikationseinheit, welche insbesondere auf Methoden des maschinellen Lernens beziehungsweise künstliche Intelligenz zurückgreifen, dazu in der Lage, das Erstellen zu generalisieren. Danach ergibt sich der Vorteil, dass Merkmale beziehungsweise Features erkannt und einem Fertigungsprozess zugeordnet werden können, ohne dass diese im Vorfeld bekannt sein müssen.

Dazu ist es insbesondere von Vorteil für das Verfahren, wenn die Klassifizierungseinheit und/oder die Merkmalerkennungseinheit, insbesondere jeweils mittels einer Methode des maschinellen Lernens, betrieben wird. Bei der jeweiligen Methode kann es sich insbesondere um ein überwachtes Lernen, im Englischen Supervised Learning, und/oder um ein Graphen-neuronales Netz, im Englischen Graph neural network, handeln. Mit anderen Worten wird ein künstliches neuronales Netz verwendet, welches zur Verarbeitung von Daten, die als Graphen dargestellt werden können, ausgelegt ist. Dabei sind grundlegende Komponenten eines Graphen-neuronalen Netzes oder eines Graph neural networks (GNN) eine permutationsäquivariante Schicht, eine lokale Pullingschicht und eine globale Pulling- oder Auslöseschicht. Dabei können solche Netze beispielsweise mittels geometrischem Tiefenlernen beziehungsweise Geometrie Deep Learning trainiert werden. Bei dem überwachten Lernen handelt es sich insbesondere um eine Methode, das neuronale Netz beziehungsweise die Methode des maschinellen Lernens zu trainieren, wobei Trainingsdaten bereitgestellt sind, welche insbesondere gelabelt sein können. Durch die Methode des maschinellen Lernens ergibt sich der Vorteil, dass insbesondere in Abhängigkeit eines guten Trainingsdatensatzes eine besonders hohe Erkennung beziehungsweise Bestimmen der Merkmale sowie eine Klassifizierung mit den entsprechenden Arbeitsvorgängen ermöglicht wird.

In weiterer vorteilhafter Ausgestaltung wird der Arbeitsplan als Netzplan ausgebildet. Zusätzlich oder alternativ wird das Bauteil als, insbesondere rotationssymmetrische beziehungsweise, wie oben definiert, im Wesentlichen rotationssymmetrische, Welle und somit als Maschinenelement ausgebildet. Mit anderen Worten dient das Verfahren dazu, Arbeitspläne für rotationssymmetrische Bauteile, wie Wellen, bereitzustellen, wobei die Arbeitspläne entsprechend als Netzplan ausgebildet werden und somit eine bei klassischen Arbeitsplänen vorzufindende serielle Hierarchie vermieden werden kann. Dadurch ergibt sich der Vorteil, dass das Bauteil besonders flexibel hergestellt werden kann.

In weiterer vorteilhafter Ausgestaltung der Erfindung wird die Merkmalerkennungseinheit mit einem Trainingsdatensatz trainiert, welcher relevante Konstruktionsmerkmale beinhaltet und/oder synthetisch erzeugt und/oder gelabelt beziehungsweise markiert ist. Mit anderen Worten wird ein Trainingsdatensatz verwendet, welcher wenigstens eines und insbesondere mehrere Bauteile umfasst, welche synthetisch erzeugt beziehungsweise künstlich erzeugt sind und somit keinem realen Bauteil entsprechen beziehungsweise entsprechen müssen. In der Regel kann davon ausgegangen werden, dass je größer die Anzahl an Bauteilen beziehungsweise Bauteilvarianten in dem Trainingsdatensatz ist, das Training besser Vorhersagen für das Modell beziehungsweise die Methode liefert. Dazu ist es von Vorteil, wenn die Merkmale des Trainingsdatensatzes, insbesondere für eine Konstruktion beziehungsweise Herstellen, relevante Konstruktionsmerkmale beinhalten. Zusätzlich oder alternativ kann beispielsweise ein Trainingsdatensatz, welcher zum Trainieren der Klassifizierungseinrichtung verwendet wird, beispielsweise mehrere Klassen für die Arbeitsvorgänge umfassen. Solch eine Klasse kann beispielsweise ein Weichdrehen, ein Bohren, ein Fräsen und dergleichen sein. Durch das Verwenden eines vorteilhaft ausgebildeten Trainingsdatensatzes ergibt sich der Vorteil, dass das entsprechende Modell beziehungsweise die Merkmalerkennungseinheit und das diesen zugrundeliegende, insbesondere als Graph neural network ausgebildete, neuronale Netz, besonders vorteilhaft zum Erkennen der Merkmale herangezogen beziehungsweise verwendet werden können.

In weiterer vorteilhafter Ausgestaltung der Erfindung wird der Trainingsdatensatz dadurch erzeugt, dass zufällig wenigstens zwei Teile mit wenigstens einem jeweiligen Merkmal erzeugt werden und diese wenigstens zwei Teile zufällig und insbesondere rotationssymmetrisch kombiniert werden und/oder dass im dreidimensionalen Modell eines Bauteils ein zufällig erzeugtes Teil hinzugefügt oder alternativ entfernt werden kann. Handelt es sich bei dem Bauteil um eine Welle, kann beispielsweise ein Teil ein entsprechender Zylinderabschnitt der Welle sein. So können mit anderen Worten verschiedene Zylinderabschnitte mit verschiedenen Features gebildet werden, wobei die Zylinderabschnitte in einem Schritt zu Bauteilen beziehungsweise kompletten Wellen kombiniert werden. Dabei können beispielsweise Zahnräder und Einzelteile ebenfalls als Merkmal hinzugefügt werden. Das Erstellen eines Bauteils für den Trainingsdatensatz ist somit ein iterativer Prozess, bei dem das Modell des Bauteils beispielsweise bei jeder Iteration und somit beim Zusammenfügen um einen Zylinderabschnitt erweitert werden kann. Dadurch ergibt sich der Vorteil, dass ein besonders variantenreicher Trainingsdatensatz erzeugt werden kann, wodurch das Training besonders effizient durchgeführt werden kann.

Darüber hinaus können bereits bekannte beziehungsweise zu fertigende Bauteile durch zufällig erzeugte Teile derart variiert werden, dass beispielsweise auf das Erkennen konkreter Bauteile trainiert werden kann, dort aber auch unterschiedliche Varianten beziehungsweise ungewöhnliche Merkmale vorteilhaft erkannt werden können.

In weiterer vorteilhafter Ausgestaltung der Erfindung weist der Trainingsdatensatz unterschiedliche Komplexitätsstufen, insbesondere der enthaltenen Bauteile, auf. Dies dient insbesondere zum Testen der Merkmals- beziehungsweise Featureerkennung und somit insbesondere für eine Validierung des Modells beziehungsweise dem neuralen Netz. Mit anderen Worten wird ein Trainingsdatensatz bereitgestellt, dessen Anzahl an Testteilen beziehungsweise Bauteilmodellen frei gewählt werden kann, wobei mehrere, insbesondere 4 verschiedene, Komplexitätsstufen des Trainingsdatensatzes vorgelegt werden können, sodass die Methode der Featureerkennung in verschiedenen Stufen getestet werden kann. So kann beispielsweise, wenn das Bauteil eine Welle ist, die erste Komplexitätsstufe einen Zylinder mit einem einzigen Feature umfassen, während die zweite Stufe mehrere Features ohne Überlappung aufweist, die dritte Komplexitätsstufe kann mehrere kombinierte Features, die untereinander keine Schnittpunkte haben, aufweisen. Schließlich kann die 4. Stufe mehrere kombinierte Features mit Überlappung aufweisen. Dadurch ergibt sich der Vorteil, dass auf besonders vorteilhafte Weise das Modell, mittels welchem die Merkmalserkennungseinheit die Merkmale identifiziert, überprüft werden kann.

In weiterer vorteilhafter Ausgestaltung der Erfindung werden für das Graphenmodell zwei Kantentypen für die Kanten verwendet, wobei der erste Kantentyp eine Nachbarschaft der Knoten und der zweite Kantentyp paarweise die bestimmten Merkmale und/oder Merkmalstypen zweier Knoten charakterisieren. Mit anderen Worten umfasst das Graphenmodell Kanten, welche die Nachbarschaft zweier Knoten beziehungsweise der in den Knoten enthaltenen Merkmale beziehungsweise Merkmalstypen beschreibt, wie beispielsweise die genannte Bohrung in einer Fläche. Der zweite Kantentyp charakterisiert bestimmte Merkmale, welche beispielsweise mittels der PMIs dargestellt sind, welche zwei Knoten beziehungsweise die zugrundeliegenden Merkmale des Bauteils gemeinsam haben ohne benachbart sein zu müssen. So kann beispielsweise eine Oberflächenbeschaffenheit an einem Ende des Bauteils gleich der Oberflächenbeschaffenheit an einem anderen Ende des Bauteils sein, sodass sich diese beiden Merkmale an dem Bauteil nicht berühren beziehungsweise nicht aneinander liegen, aber die gleichen Eigenschaften aufweisen, was durch die zweite Art der Kante ausgedrückt werden kann. Dadurch ergibt sich der Vorteil, dass das Graphenmodell besonders vorteilhaft zum Klassifizieren der AVOs verwendet werden kann.

Weitere vorteilhafte Ausgestaltungen der Erfindung werden nach dem Zuordnen durch die Klassifizierungseinheit die Merkmale beziehungsweise Merkmalstypen in Abhängigkeit der Zuordnung, insbesondere vor dem Erstellen des Arbeitsplans, gruppiert. Mit anderen Worten können Bereiche am Bauteil, welche die gleichen Merkmalseigenschaften aufweisen, beziehungsweise mittels gleichen und somit insbesondere mittels gleichen AVOs herzustellen sind und derart gruppiert werden, dass beispielsweise die Reihenfolge der Bearbeitung im Arbeitsplan berücksichtigt werden kann, womit beispielsweise ein größeres Netz für bestimmte Bereiche des Arbeitsplanes möglich ist. Zusätzlich oder alternativ können effizientere Arbeitspläne erstellt werden, da beispielsweise mit dem somit erstellten Arbeitsplan, welcher gruppierte Zuordnungen enthält, beispielsweise ein mehrfaches Umrüsten eines Werkzeugs bei der Herstellung des Bauteils in einer Maschine entfallen kann. Dadurch ergibt sich der Vorteil, dass das Bauteil besonders effizient hergestellt werden kann.

In weiterer vorteilhafter Ausgestaltung der Erfindung charakterisiert das Merkmal eine Fläche, Bohrung und/der Tasche des Bauteils und/oder der Merkmalstyp charakterisiert eine Abmessung, wie beispielsweise Länge und/oder einen Radius, eine Form und/oder eine Lagetoleranz, insbesondere des Merkmals, darüber hinaus kann beispielsweise der Merkmalstyp eine Oberflächenrauheit charakterisieren. Mit anderen Worten können beliebige Eigenschaften beziehungsweise Informationen über Eigenschaften der Merkmale beziehungsweise verschiedene Bereich des Bauteils, welche durch die Merkmale repräsentiert werden, in dem Graphenmodell vorgehalten werden. Dadurch ergibt sich der Vorteil, dass auf besonders vorteilhafte Weise eine Zuordnung durch die Klassifizierungseinheit erfolgen kann.

In weiterer vorteilhafter Ausgestaltung wird anhand des Arbeitsplanes eine Operationssequenz erstellt und/oder das Bauteil mittels des Arbeitsplans und/oder der Operationssequenz hergestellt. Die Operationssequenz beschreibt beispielsweise bei der Herstellung an einer konkreten Maschine verwendete Werkzeuge, Vorschübe sowie Geschwindigkeiten. Dadurch kann beispielsweise für eine bestimmte Fertigungsanlage der Arbeitsplan konkretisiert werden, sodass eine unmittelbare Umsetzung der Herstellung des Bauteils auf einfache Weise zu realisieren ist.

Ein zweiter Aspekt der Erfindung betrifft ein Computerprogramm, welches direkt in einen Speicher der elektronischen Recheneinrichtung ladbar ist, mit Programm ermitteln, um das Verfahren gemäß dem ersten Aspekt der Erfindung auszuführen, wenn das Programm in der elektronischen Recheneinrichtung ausgeführt wird.

Dabei sind Vorteile und vorteilhafte Ausgestaltungen sowie Weiterbildungen des ersten Aspekts der Erfindung als Vorteile, vorteilhafte Ausgestaltungen und Weiterbildungen des zweiten Aspekts der Erfindung anzusehen und umgekehrt.

Ein dritter Aspekt der Erfindung betrifft einen elektronisch lesbaren Datenträger mit darauf gespeicherten elektronisch lesbaren Speicherinformationen, welche zumindest ein Computerprogramm gemäß dem zweiten Aspekt der Erfindung umfassen und derart ausgestaltet sind, dass sie beim Verwenden des Datenträgers in einer elektronischen Recheneinrichtung ein Verfahren gemäß dem ersten Aspekt der Erfindung durchführen.

Dabei sind Vorteile, vorteilhafte Ausgestaltungen und Weiterbildungen des ersten und zweiten Aspekts der Erfindung als Vorteile, vorteilhafte Ausgestaltungen und Weiterbildungen des dritten Aspekts der Erfindung anzusehen und umgekehrt.

Während die vorliegende Erfindung im Detail unter Bezugnahme auf bestimmte Ausführungsformen beschrieben wurde, sollte man sich bewusst sein, dass die vorliegende Erfindung nicht auf diese Ausführungsformen beschränkt ist. In Anbetracht der vorliegenden Offenbarung sind für den Fachmann viele Modifikationen und Variationen möglich, ohne dass der Anwendungsbereich der verschiedenen Ausführungsformen der vorliegenden Erfindung, wie sie hier beschrieben sind, verlassen wird. Der Umfang der vorliegenden Erfindung wird daher eher durch die folgenden Ansprüche als durch die vorangehende Beschreibung angegeben. Alle Änderungen, Modifikationen und Variationen, die in den Bedeutungs- und Äquivalenzbereich der Ansprüche fallen, sind in deren Anwendungsbereich zu berücksichtigen.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Unabhängig vom grammatikalischen Geschlecht eines bestimmten Begriffes sind Personen mit männlicher, weiblicher oder anderer Geschlechteridentität mit umfasst.
FIG 1 ein schematisches Ablaufdiagramm für ein Verfahren zum Bereitstellen eines Arbeitsplans, welcher für die Herstellung eines Bauteils verwendet wird;
FIG 2 eine schematische Darstellung einzelner Schritte des Verfahrens gemäß FIG 1; und
FIG 3 eine schematische Darstellung eines Arbeitsplans, welcher mittels des Verfahrens gemäß FIG 1 und 2 erzeugbar ist.

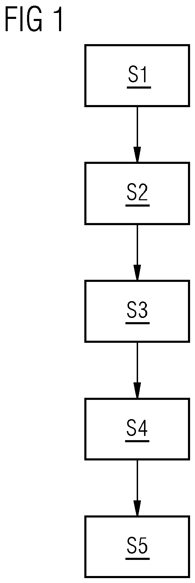

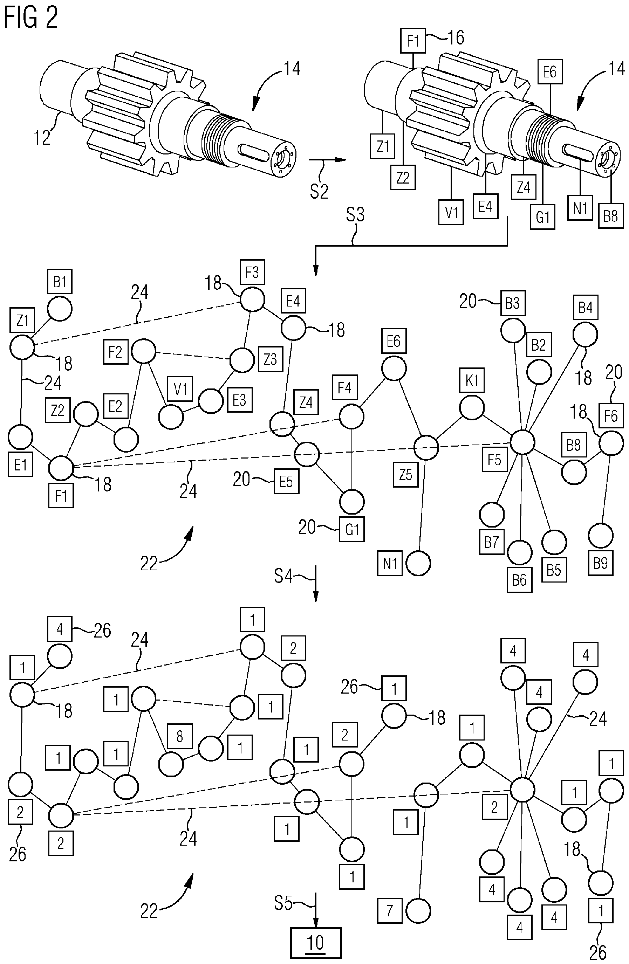

In FIG 1 zeigt ein schematisches Ablaufdiagramm für ein Verfahren zum Bereitstellen eines Arbeitsplans 10, welcher in FIG 2 gezeigt ist und für die Herstellung eines Bauteils 12 verwendet wird. Das Verfahren umfasst dabei Schritte S1 bis S5:
Im ersten Schritt S1 erfolgt ein Erfassen eines dreidimensionalen Modells 14 des Bauteils 12 durch eine Erfassungseinheit.

Im zweiten Schritt S2 erfolgt das Bestimmen von Merkmalen 16 des Bauteils 12 durch eine Merkmalerkennungseinheit an dem dreidimensionalen Modell 14, wobei für das jeweilige bestimmte Merkmal 16 beziehungsweise eine zugehörige Eigenschaft ein insbesondere gelabelter Knoten 18 gebildet wird, welcher zumindest einen Merkmalstyp 20 des Merkmals umfasst.

Im dritten Schritt S3 erfolgt das Bilden eines Graphenmodells 22 des Bauteils 12 mittels der Knoten 18 und durch Charakterisieren von Kanten 24, welche einen Zusammenhang zweiter Knoten zueinander beschreiben.

Im vierten Schritt S4 erfolgt das Zuordnen beziehungsweise Klassifizieren des jeweiligen Knotens 18 des Graphenmodells 24 zu wenigstens einem Arbeitsvorgang 26 (AVO) beziehungsweise einer Klasse des Arbeitsvorgangs 26 mittels einer Klassifizierungseinheit.

Schließlich erfolgt im fünften Schritt S5 das Bilden des Arbeitsplans 10 in Abhängigkeit von den zugeordneten Arbeitsvorgängen beziehungsweise klassifizierten Arbeitsvorgängen 26.

FIG 2 zeigt anhand des dreidimensionalen Modells 14, welches bereits gemäß Schritt S1 eingelesen ist, nochmals die Abfolge des Verfahrens gemäß FIG 1, wobei an dem dreidimensionalen Modell 14 die Merkmale 16 gelabelt sind und diese als gelabelte Knoten 18 für das Graphenmodell 22 verwendet werden und anhand der gelabelten Merkmale 16 beziehungsweise des jeweiligen Merkmals 16 wenigstens eines Merkmaltyps 20 die Klassifizierung gemäß den Arbeitsvorgängen 26 erfolgt.

Dabei löst das hier vorgestellte Verfahren das Problem, dass ein Arbeitsplan 10 bisher nur manuell aufwendig ohne große Flexibilität erstellt werden kann. Dabei kann der Kern des Verfahrens beziehungsweise der Methode im Wesentlichen auf die drei Schritte S2 bis S4 konzentriert werden. Die Schritte S1 - ein Einlesen des Modells 14 an beispielsweise einer Schnittstelle einer elektronischen Recheneinrichtung - und der Schritt S5 - ein entsprechendes Bilden des Arbeitsplanes 10 und Ausgeben des Arbeitsplanes - ergänzen diesen Kern und vervollständigen das Verfahren.

Entscheidend, um den Arbeitsplan 10 bereitstellen zu können, sind die Schritte S2 bis S4, welche im Folgenden detailliert beschrieben werden. Für die Featureerkennung beziehungsweise die Erkennung der Merkmale kann insbesondere eine KI-Methode, das heißt künstliche Intelligenz und somit eine Methode des maschinellen Lernens, verwendet werden. Die KI-Methode ist insbesondere dem Supervised Learning zugeordnet, wobei es sich bei der KI-Methode beispielsweise um ein neuronales Netz, welches hier als Graphen-neuronales Netz ausgebildet ist, handelt. Zum Anlernen beziehungsweise Trainieren dieses neuronalen Netzes wird ein Datensatz beziehungsweise ein Trainingsdatensatz verwendet, welcher die relevanten Konstruktionsfeatures beinhaltet, wobei so ein Datensatz nicht unbedingt für reale Anwendungen vorgehalten werden braucht. So fehlt solch einem Trainingsdatensatz beispielsweise ein Bezug zu realen Anwendungsfällen oder entsprechende Merkmale 16 beziehungsweise Features können nicht gelabelt sein, was jedoch für ein überwachtes Lernen, wie dem Supervised Learning, nicht vorteilhaft ist.

Aus diesem Grund können synthetisch erzeugte Datensätze, welche gelabelt werden, entwickelt werden, welche insbesondere aus realitätsnahen Komponenten beziehungsweise Bauteilen 12 aufgebaut sein können.

Die Features beziehungsweise Merkmale 16 können beispielsweise aus verschiedenen Klassen von Fertigungsmerkmalen ausgewählt werden, wobei zu solchen Merkmalen 16 beziehungsweise Merkmalstypen 20 Gewinde und Zahnräder oder dergleichen zählen können.

Dabei handelt es sich bei dem Bauteil 12 beispielsweise insbesondere um ein rotationssymmetrisches Bauteil 12, abgesehen von Bohrungen oder dergleichen, welche nicht rotationssymmetrisch an dem Bauteil 12 sein müssen, wobei das Bauteil 12 somit insbesondere als Welle beziehungsweise Maschinenelement ausgebildet sein kann. Ferner kann das Bauteil 12 mittels des Verfahrens vorteilhaft hergestellt werden.

Der hier vorgeschlagene synthetische Trainingsdatensatz kann insbesondere Lokalisierungsinformationen umfassen, welche beispielsweise gelabelte beziehungsweise markierte Flächen und deren Lagen im Raum umfassen.

So ist es kurz zusammengefasst von Vorteil für das Verfahren, wenn die Merkmalserkennungseinheit und darüber hinaus auch die Klassifizierungseinheit mittels einer Methode des maschinellen Lernens betrieben werden, wobei es sich bei einer Methode insbesondere um ein überwachtes Lernen und/oder ein Graphen-neuronales Netz handeln kann. Für einen vorteilhaften Herstellungsprozess des Bauteils wird der Arbeitsplan ferner vorteilhafter Weise als Netzplan beziehungsweise Vorgangspfeilnetz ausgebildet.

Ferner von Vorteil für das Verfahren ist es, wenn vor dem Bestimmen der Merkmale die Merkmalerkennungseinheit entsprechend mit einem Trainingsdatensatz trainiert wird, wobei ein vorteilhafter Trainingsdatensatz, um eine besonders gute Erkennungsrate der Merkmale zu erhalten, derart erzeugt werden kann, dass zufällig wenigstens zwei Teile mit wenigstens einem jeweiligen Merkmal erzeugt werden und diese wenigstens zwei Teile zufällig, insbesondere rotationssymmetrisch, kombiniert werden.

Soll darüber hinaus auf konkrete Modelle hintrainiert werden, beispielsweise im Rahmen eines speziellen Kunden- beziehungsweise Anwenderwunsches und somit bei einer Customer specific implementation, kann ein tatsächliches dreidimensionales Modell eines Bauteils beziehungsweise eines tatsächlichen Bauteils 12 verwendet werden und dieses um zufällig erzeugte Teile ergänzt oder verringert werden.

Somit erfolgt die Herstellung des Trainingsdatensatzes im Wesentlichen mittels zwei Hauptstritten: die Erstellung einzelner insbesondere zylindrischer Teile mit zufällig ausgewählten und generierten Features beziehungsweise Merkmalen und eine darauffolgende zufällige Kombination dieser konstruierten, insbesondere zylindrischen, Teile zu einem vollständigen, insbesondere rotationssymmetrischen, Bauteil.

Der Datensatz beziehungsweise Trainingsdatensatz kann so angelegt werden, dass er verschiedene Datendarstellungen, beispielsweise gemäß dem ISO-Standard Step 2/14, umfasst. Darüber hinaus können insbesondere vier verschiedene Komplexitätsstufen des Datensatzes beziehungsweise der Trainingsdaten vorgelegt werden, somit weist der Trainingsdatensatz unterschiedliche Komplexitätsstufen auf. So kann die Methode zur Featureerkennung beziehungsweise die Merkmalserkennungseinheit in verschiedenen Stufen getestet werden. Die Anzahl der für das Training benötigten Testbauteile kann dabei frei gewählt werden. Ein Automatismus kann die gewünschte Anzahl an Testbauteilen aus einem Datensatz beziehungsweise in dem Datensatz vorhandenen Features beziehungsweise Merkmale 16 erzeugen, indem dessen Merkmale 16 auf unterschiedliche Art und Weise kombiniert werden.

Dabei kann ein automatisiertes Labeling der Flächen beziehungsweise Merkmale durchgeführt werden, wobei das Labeling der Flächen auf dem Erzeugen neuer Flächen im Prozess durch das Hinzufügen neuer Features basieren kann. Das Erstellen des Trainingsdatensatzes kann beispielsweise mittels eines Algorithmus erfolgen, wobei der Algorithmus mit der Erstellung eines Zylinders mit zufälliger Höhe und Durchmesser beginnen kann. Die dabei erzeugten drei Flächen des Zylinders können mit Null gelabelt werden, was geometrisch beispielsweise einem Stock beziehungsweise Stab entspricht. Als nächstes kann ein einzelnes Merkmal 16, wie beispielsweise eine Tasche oder Bohrung zufällig ausgewählt und automatisch eingefügt werden. Der Zylinder kann jetzt mit einem entsprechenden Feature beziehungsweise Merkmal 16 versehen werden. Dafür werden neue Flächen erstellt, die das neue Merkmal 16 bilden. Die Flächen des Merkmals 16 werden mit dem entsprechenden Merkmalslabel beziehungsweise mit dem wenigstens einem Merkmalstyp 20 versehen beziehungsweise gelabelt.

Dieser Ablauf des Hinzufügens von Merkmalen 16 kann solange fortgesetzt werden, bis die gewünschte Anzahl von Merkmalen 16 pro Zylinderabschnitten erreicht ist. So können die mehreren Komplexstufen beispielsweise so ausgebildet sein, dass die erste Komplexstufe lediglich den Zylinder mit einem einzigen Feature enthält. Die zweite Stufe kann mehrere Features beziehungsweise Merkmale ohne Überlappung umfassen, die dritte Stufe mehrere kombinierte Features, die untereinander keine Schnittpunkte haben. Schließlich kann die vierte Komplexitätsstufe mehrere kombinierte Merkmale mit Überlappung aufweisen.

Auf diese Art können verschiedene Zylinderabschnitte mit verschiedenen Merkmalen 16 gebildet werden. Diese Zylinderabschnitte können im nächsten Schritt zu Bauteilen 12 kombiniert werden. Handelt es sich bei dem Bauteil 12 um eine Welle, werden die Zylinderabschnitte dabei zu kompletten Wellen kombiniert. Zahnräder und Einzelteile können in zwei getrennten Ordnern gespeichert werden. Die Erstellung der kompletten Welle kann durch einen iterativen Prozess dargestellt werden, bei dem das Modell des Bauteils 12 für einen Trainingsdatensatz bei jeder Iteration um einen einzelnen Zylinderabschnitt erweitert werden kann. Bei jeder Iteration wird zufällig entschieden, ob ein Zahnrad oder ein automatisch generiertes Einzelteilmodell hinzugefügt wird.

So kann beispielsweise eine Step-Datei für den Trainingsdatensatz erzeugt werden, welche Labelfeatures beziehungsweise Merkmale zum Antrainieren des Graphen-neuronalen Netzwerks, welches der Merkmalserkennungseinheit zugrunde liegt, genutzt werden. Nach dem Training kann das GNN somit Merkmale beziehungsweise Features auch in ungelabelten Step-Dateien identifizieren. Das 3D-Modell kann als Graph dargestellt und dem GNN der Merkmalerkennungseinheit übergeben werden. Jeder Knoten 18 des Graphen kann dabei einer Fläche des 3D-Modells und somit einem Merkmal 16 entsprechen. Das GNN der Merkmalerkennungseinheit soll nun den Flächenfeatures beziehungsweise die Merkmaltypen zuordnen. Nach der Klassifizierung können die Features insbesondere kopiert werden, indem die zusammengehörigen Flächen für ein einzelnes Feature ein gemeinsames Label bekommen. Features beziehungsweise Merkmalgruppen können aufsteigende nummeriert werden: beispielsweise Zylinder mit Z1, Z2 usw. Die gelabelten Flächen sind der Input beispielsweise für eine zweite Stufe, die automatisierte Prozessplanung.

Nachdem die Merkmale 16 beziehungsweise Merkmalstypen 20 identifizierte werden, können im nächsten Schritt die Fertigungsschritte zum Fertigen der Merkmale 16 ausgewählt werden. Die Fertigungsschritte für die einzelnen Merkmale 16 können stark voneinander abhängen. Diese Abhängigkeit soll bei dem Erstellen des Arbeitsplanes 10 berücksichtigt werden, dabei wird, um diese Abhängigkeiten vorteilhaft darzustellen, die Graphenstruktur des Graphenmodells 22 verwendet. Ausgehend von der Merkmalerkennung werden die Merkmale 16 gruppiert und als Knoten 18 in dem Graphenmodell 22 dargestellt. Die Knoten 18 enthalten die Information des Featuretyps beziehungsweise Merkmaltyps 20, beispielsweise Bohrung, Tasche etc., sowie eine Dimension beziehungsweise eine Länge und Radius beziehungsweise Form und/oder Lagetoleranzen, sowie beispielsweise eine Oberflächenrauheit.

In dem Graphenmodell 22 können insbesondere zwei Kantentypen für die Kanten 24 verwendet werden. Dabei kann der erste Kantentyp für Merkmale 16, die lokal nahe zusammenliegen, verwendet werden, während der zweite Kantentyp für die Verbindung von Merkmalen 16 ist, die eine gemeinsame Produkt- oder Fertigungsinformation teilen. Somit können alle Abhängigkeiten des 3D-Modells 14 zusammen mit dem entsprechenden PMI als Graph beziehungsweise Graphenmodell 22 dargestellt werden. Dieses Graphenmodell 22 wird als Eingabe für die Klassifizierungseinheit, welche ebenfalls auf einem insbesondere zweiten Graphen-neuronalen Netzwerk (GNN) basieren kann, verwendet, das insbesondere zwischen vordefinierten Informationsfolgen entscheiden kann.

Dabei ist es insbesondere ein Ziel, jedem Knoten 18 und somit jedem Feature 16 aus dem dreidimensionalen Modell 14 den zu ausbilden notwendigen Arbeitsvorgang 26 zuzuordnen. Dabei wird mittels der Klassifizierung in erster Linie nicht über den generellen Prozess entschieden, sondern erstmals darüber, ob mehrere Operationen für die Herstellung des Features oder Merkmals 16 notwendig sein können. Dabei kann sich der Prozess für das Herstellen beziehungsweis Ausbilden beispielsweise eines Lochs oder einer Tasche in einem Bohren und/oder Fräsen unterscheiden, was noch nicht festgelegt werden braucht.

Die Tasche kann ein Beispiel eines Zylinderfeatures sein, das die Klasse Weichdrehen und Schleifen zugeordnet bekommt, da es beispielsweise nicht ausreichend sein kann, eine vorgegebene Oberflächenrauheit nur mit Weichdrehen zu erreichen.

Beispielklassen für Arbeitsvorgänge 26 sind in der folgenden Tabelle dargestellt:

| Kennzeichen | AVO-Klasse |
|---|---|
| 1 | Weichdrehen |
| 2 | Weichdrehen - Hartdrehen |
| 3 | Weichdrehen - Schleifen |
| 4 | Bohren |
| 5 | Tiefbohren |
| 6 | Drehen - Tiefbohren |
| 7 | Fräsen |
| 8 | Wälzfräsen |
| 9 | Wälzstoßen |
| 10 | Wälzfräsen und Rollen |
| 11 | Wälzfräsen und Schleifen |
| 12 | Wälzstoßen und Schleifen |

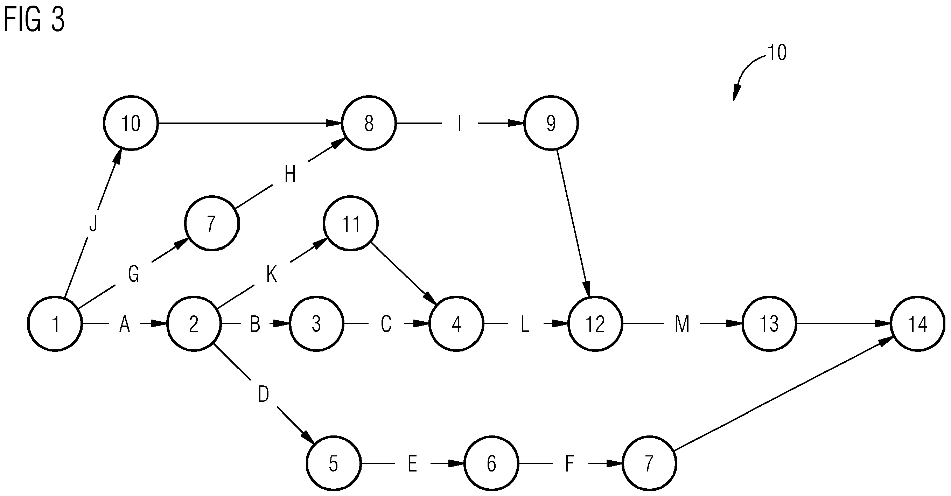

FIG 3 zeigt ein schematisches Beispiel eines mittels des Verfahrens erstellten Arbeitsplans 10. Dabei läuft in FIG 3 die zeitliche Abfolge von links nach rechts, sodass die Pfeilrichtung eine zeitliche Abfolge vorgibt. Zuerst wird durch das Verfahren der Arbeitsplan 10 insbesondere als neutraler Arbeitsplan 10 für alle Geometrie-veränderten Prozesse bei der Herstellung des Bauteils 12 ausgegeben.

Dieser neutrale Arbeitsplan 10 ist insbesondere nicht sequentiell, sondern kann als Netzplan, wie in FIG 3 gezeigt, ausgebildet sein. Als neutral kann der Arbeitsplan 10 bezeichnet werden, wenn dieser noch maschinenunabhängig ausgebildet ist und somit noch nicht entschieden ist, welche Maschine und/oder Fertigungsverfahren beziehungsweise Fertigungsschritt zur Herstellung des entsprechenden Merkmals 16 verwendet wird.

So kann über eine entsprechende Fertigungs-Skill-Ontologie beispielsweise für einen anwenderspezifischen Arbeitsplan 10 erzeugt werden, welcher den Maschinenplan beziehungsweise die Abläufe bei einem speziellen Anwender, beispielsweise ein bestimmter Hersteller mit bekanntem Maschinenpark, widerspiegelt.

So können beispielsweise im Wesentlichen ein Arbeitsplan 10 gemäß eine Baseline Implementation (BLI) und einer Customer specific Implementation (CSI) erzeugt werden.

Bei der Baseline Implementation erkennt die künstliche Intelligenz Standardmerkmale und erzeugt eine regelbasierte Zuordnung von Fertigungsprozessen inklusive zugehöriger PMIs. Bei der BLI kann die KI-basierte Merkmalerkennung beinhalten, dass mit automatisch generiert gelabelten Datensätzen trainiert wird. Die erkannten Merkmale 16 werden mit ihren PMIs abgeglichen und in der endgültigen Graphenstruktur beziehungsweise im Graphenmodell 22 dargestellt, um entsprechende Abhängigkeiten zu erfassen. Die Flächen mit den entsprechenden Features beziehungsweise Merkmalkennzeichnungen werden für Merkmale 16, wie Zahnräder, die aus mehreren Flächen bestehen, beispielsweise gruppiert. Jedes vollständige Merkmal 16 kann in aufsteigender Reihenfolge bezeichnet werden. Das Ergebnis enthält beispielsweise eine Step-Datei, in der alle Flächen beschriftet und mit entsprechenden Merkmalen 16 beziehungsweise Merkmalstypen 20 gruppiert sind. Ohne anwenderspezifisches Wissen werden die Merkmale regelbasiert auf die Fertigungsprozesse auf Basis der Literatur abgebildet. Dabei liegt das Ziel der BLI beispielsweise darin, möglichst viele Alternativen zu generieren, damit es besonders einfach an anwenderspezifische Bedürfnisse angepasst werden kann.

Solche anwenderspezifischen Bedürfnisse und die Anpassungen daran sieht die Customer specific Implementation vor. Bei der CSI geht es darum, die Basisimplementierung beziehungsweise BLI mit anwenderspezifischen Daten zu erweitern. So kann der Schritt der Merkmalserkennung durch weitere Trainingsdaten erweitert werden. So kann mit anwenderspezifischen Daten nachtraininert wird, welche beispielsweise, wie bereits beschrieben, anhand eines, insbesondere anwenderspezifischen, tatsächliches Bauteil 12 durch Hinzufügen und/oder Wegnehmen zufällige Merkmale 16 beziehungsweise Teile erzeugt werden.

So kann, um mehr anwenderspezifische Daten zu erhalten, mit anderen Worten Samples, des Anwenders in kleine Teile zerlegt und mit anderen Teilen aus anderen Samples zusammengeführt werden, um eine Datenerweiterung zu erreichen. Die Merkmale 16 oder ihre Merkmalstypen 20 beziehungsweise Attribute und die PMIs werden als Graphenstruktur extrahiert und können nun mit Anwenderdaten trainiert werden. Dabei kann es vorteilhaft sein, dass der Anwender 3D-Modelle 14 mit PMI und/oder einen Arbeitsplan 10 mit den Arbeitsvorgängen 26 mit den entsprechenden Merkmalen 16 bereitstellt.

Daraus kann die Graphenstruktur beziehungsweise das Graphenmodell 22 automatisiert abgeleitet und für die Knotenklassifizierung mittels der Klassifizierungseinheit trainiert werden. So können beispielsweise für AVOs 26 entsprechend anwenderspezifischen Maschinen Vorschübe und Geschwindigkeiten bestimmt werden. Am Ende kann jedem Feature beziehungsweise Merkmal 16 eine Operationssequenz für die Fertigung beziehungsweise Erstellung des Bauteils 12 zugeordnet werden, so kann das Training direkt auf Anwenderdaten basieren und entsprechende anwenderspezifische Abläufe angepasst werden. So können die in dem Arbeitsplan 10 vorgeschlagenen Arbeitsvorgänge 26 für den Anwender optimiert werden.

Ein hierin beschriebenes Verfahren kann auch in Form eines Computerprogramms vorliegen, das das Verfahren auf einer elektronischen Recheneinrichtung implementiert, wenn es auf dieser ausgeführt wird. Ebenso kann ein elektronisch lesbarer Datenträger mit darauf gespeicherten elektronisch lesbaren Steuerinformationen vorliegen, welche zumindest ein beschriebenes Computerprogrammprodukt umfassen und derart ausgestaltet sind, dass sie bei Verwendung des Datenträgers in der elektronischen Recheneinrichtung ein beschriebenes Verfahren durchführen.

Durch das hier vorgestellte Verfahren sowie das Computerprogramm und dem Datenträger kann eine Erweiterung von einer durch künstliche Intelligenz realisierten Merkmalserkennung mit Anwenderdaten erfolgen. Zusätzlich können im BOP Arbeitsplätze, Tools, Feeds und Speeds etc., aus analysierten Arbeitsplänen 10 abgeleitet werden.

### Bezugszeichenliste

- 10: Arbeitsplan
- 12: Bauteil
- 14: dreidimensionales Modell
- 16: Merkmal
- 18: Knoten
- 20: Merkmaltyp
- 22: Graphenmodell
- 24: Kante
- 26: Arbeitsvorgang
- S1: erster Schritt
- S2: zweiter Schritt
- S3: dritter Schritt
- S4: vierter Schritt
- S5: fünfter Schritt

## Patentansprüche

1. Verfahren zum Bereitstellen eines Arbeitsplans (10), welcher für die Herstellung eines Bauteils (12) verwendet wird, mit den Schritten:
- Erfassen eines dreidimensionalen Modells (14) des Bauteils (12) durch eine Erfassungseinheit; (S1)
- Bestimmen von Merkmalen (16) des Bauteils (12) durch eine Merkmalserkennungseinheit an dem dreidimensionalen Modell (14), wobei für das jeweilige bestimmte Merkmal (16) ein Knoten (18), welcher zumindest einen Merkmalstyp (20) umfasst, gebildet wird; (S2)
- Bilden eines Graphenmodells (22) des Bauteils (12) mittels der Knoten (18) und durch Charakterisieren von Kanten (24), welche einen Zusammenhang zweier Knoten (18) beschreiben; (S3)
- Zuordnen des jeweiligen Knotens (18) des Graphenmodells (22) zu wenigstens einem Arbeitsvorgang (26) mittels einer Klassifizierungseinheit; (S4) und
- Bilden des Arbeitsplans (10) in Abhängigkeit von den zugeordneten Arbeitsvorgängen (26). (S5)

2. Verfahren nach Anspruch 1, **dadurch gekennzeichnet, dass** die Merkmalserkennungseinheit und/oder die Klassifizierungseinheit mittels einer Methode des maschinellen Lernens betreiben wird.

3. Verfahren nach einem der vorhergehenden Ansprüche, **dadurch gekennzeichnet, dass** der Arbeitsplan (10) als Netzplan und/oder das Bauteil (12) als Welle ausgebildet werden.

4. Verfahren nach Anspruch 2 oder 3, **dadurch gekennzeichnet, dass** die Merkmalserkennungseinheit mit einem Trainingsdatensatz trainiert wird, welcher relevante Konstruktions-Merkmale beinhaltet und/oder der synthetisch erzeugt und/oder markiert ist.

5. Verfahren nach Anspruch 4, **dadurch gekennzeichnet, dass** der Trainingsdatensatz dadurch erzeugt wird, dass zufällig wenigstens zwei Teile mit wenigstens einem jeweiligen Merkmal (16) erzeugt werden und diese wenigstens zwei Teile zufällig, insbesondere rotationssymmetrisch, kombiniert werden und/oder dass zu einem dreidimensionalen Modell (14) eines Bauteils (12) ein zufällig erzeugtes Teil hinzugefügt wird.

6. Verfahren nach Anspruch 4 oder 5, **dadurch gekennzeichnet, dass** der Trainingsdatensatz unterschiedliche Komplexitätsstufen aufweist.

7. Verfahren nach einem der vorhergehenden Ansprüche, **dadurch gekennzeichnet, dass** für das Graphenmodell (22) zwei Kantentypen für die Kanten (24) verwendet werden, wobei der erste Kantentyp eine Nachbarschaft der Knoten (18) und der zweite Kantentyp paarweise die bestimmten Merkmale (16) zweier Knoten (18) charakterisieren.

8. Verfahren nach einem der vorhergehenden Ansprüche, **dadurch gekennzeichnet, dass** nach dem Zuordnen durch die Klassifizierungseinheit die Merkmale (16) in Abhängigkeit der Zuordnung gruppiert werden.

9. Verfahren nach einem der vorhergehenden Ansprüche, **dadurch gekennzeichnet, dass** das Merkmal (16) eine Fläche, Bohrung, Tasche und/oder der Merkmalstyp eine Abmessung, Form- und/oder Lagetoleranzen, und/oder eine Oberflächenrauheit charakterisieren.

10. Verfahren nach einem der vorhergehenden Ansprüche, **dadurch gekennzeichnet, dass** anhand des Arbeitsplans (10) eine Operationssequenz erstellt wird und/oder das Bauteil (12) mittels des Arbeitsplans (10) und/oder der Operationssequenz hergestellt wird.

11. Computerprogramm, welches direkt in einen Speicher einer elektronischen Recheneinrichtung ladbar ist, mit Programm-Mitteln, um die Schritte des Verfahrens nach einem der Ansprüche 1 bis 10 auszuführen, wenn das Programm in der elektronischen Recheneinrichtung ausgeführt wird.

12. Elektronisch lesbarer Datenträger mit darauf gespeicherten elektronisch lesbaren Steuerinformationen, welche zumindest ein Computerprogramm nach Anspruch 11 umfassen und derart ausgestaltet sind, dass sie bei Verwendung des Datenträgers in einer elektronischen Recheneinrichtung ein Verfahren nach einem der Ansprüche 1 bis 10 durchführen.
